# FASCICULE DE BREVET EUROPEEN

(11) **EP 1 678 656 B1**
(45) Date de publication et mention de la délivrance du brevet: **31.01.2007**
(21) Numéro de dépôt: 04791522.8
(22) Date de dépôt: 13.10.2004
(51) Int. Cl.: G06K 9/00, G06K 9/20

(54) **DISPOSITIF OPTIQUE DE FORMATION D'UNE IMAGE D EMPREINTE DIGITALE**
OPTISCHE EINRICHTUNG ZUR ERZEUGUNG EINES FINGERABDRUCK-BILDES
FINGERPRINT-IMAGE-FORMING OPTICAL DEVICE

(30) Priorité: 17.10.2003 FR 0312158
(43) Date de publication de la demande: 12.07.2006
(73) Titulaire: Sagem Défense Sécurité, 75015 Paris (FR)
(72) Inventeur: CORDIER, Chantal, F-94270 Le Kremlin Bicêtre (FR); BOUTONNE, Miguel, F-91540 Fontenay le Vicomte (FR); RIGUET, Francois, F-86200 Loudun (FR)
(74) Mandataire: Gorrée, Jean-Michel
(86) Numéro de dépôt international: PCT/FR2004/002609
(87) Numéro de publication internationale: WO 2005/038698

(56) Documents cités:
- EP-A- 0 348 182
- WO-A-01/88835
- HEBERT R T: "OFF-AXIS OPTICAL ELEMENTS IN INTEGRATED, INJECTION-MOLDED ASSEMBLIES" PROCEEDINGS OF THE SPIE, SPIE, BELLINGHAM, VA, US, vol. 2600, 23 octobre 1995 (1995-10-23), pages 129-134, XP000864100 ISSN: 0277-786X

## Description

La présente invention concerne, d'une façon générale, le domaine du relevé d'empreintes digitales et elle concerne, plus particulièrement, des perfectionnements apportés aux dispositifs optiques de formation d'une image d'empreintes digitales.

Il est explicitement souligné ici que l'invention se rapporte exclusivement à un dispositif optique propre à former une image d'empreintes digitales, et qu'elle ne concerne pas les matériels situés en aval dudit dispositif pour scruter/enregistrer l'image obtenue, détecter les points caractéristiques des empreintes digitales et fournir des informations sur la personne concernée.

On connaît déjà diverses réalisations de dispositifs optiques d'imagerie destinés à la formation d'une image d'empreintes digitales.

En particulier le document WO 01/88835 divulgue un dispositif d'imagerie d'empreintes digitales comprenant :
- une plaque optique avec :
   · une première face principale constituant une face d'apposition d'un doigt dont on souhaite obtenir une image des empreintes digitales,
   · une première face latérale conformée en miroir convergent, et
   · une seconde face latérale, opposée à la première face latérale et formant face de sortie de la plaque optique,
- au moins une source lumineuse pour éclairer la susdite première face principale à travers la plaque optique,
- un objectif focaliseur, situé en regard de ladite face de sortie de la plaque optique et ayant son point focal objet situé sensiblement dans le plan focal du miroir convergent, et
- un diaphragme muni d'une ouverture, interposé entre ladite face de sortie et ledit objectif focaliseur et situé sensiblement à proximité de l'objectif focaliseur.

Ce dispositif optique connu se révèle intéressant dans son principe en raison du faible nombre de composants optiques mis en oeuvre et de leur relative facilité de fabrication et d'assemblage. Toutefois, ce dispositif présente un inconvénient notable dû à l'importance de la lumière parasite qui accompagne l'image des empreintes digitales et qui affecte la qualité de cette image. Une réduction sensible de cette lumière parasite peut être obtenue en augmentant l'épaisseur de la plaque optique.

Les dispositifs de détection d'empreintes digitales peuvent, notamment, servir à authentifier une personne afin que celle-ci soit autorisée à effectuer une opération déterminée : dans ce cas, le dispositif de détection d'empreintes digitales accompagne souvent un autre appareil que la personne authentifiée sera autorisée à utiliser (ordinateur, machine bancaire, ...). La place disponible pour l'implantation du dispositif de détection d'empreintes digitales est alors réduite, et a fortiori le dispositif optique d'imagerie incorporé dans ce dispositif de détection d'empreintes digitales doit être réalisé sous la forme la plus compacte possible, et notamment avec l'épaisseur (ou hauteur) la plus faible possible. Pour fixer les idées, il est requis, au moins pour certaines applications, que le dispositif optique d'imagerie présente une épaisseur (ou hauteur) n'excédant pas environ 5 mm.

De ce fait, le dispositif d'imagerie décrit dans le document WO 01/88835 n'est pas satisfaisant pour répondre aux exigences de très faible épaisseur, allant de pair avec une bonne qualité de l'image des empreintes digitales obtenue, requises pour équiper les dispositifs de détection d'empreintes digitales.

La présente invention a pour but de perfectionner le dispositif d'imagerie connu précité de manière à réduire notablement la lumière parasite accompagnant l'image obtenue des empreintes digitales tout en faisant en sorte que le dispositif d'imagerie présente la très faible épaisseur requise pour l'application envisagée et n'excédant pas environ 5 mm.

A ces fins, un dispositif optique de formation d'une image d'empreintes digitales tel qu'exposé plus haut se caractérise, étant agencé conformément à l'invention, en ce que la susdite première face principale de la plaque optique forme, avec la face de sortie de cette plaque optique, un angle supérieur à 90°, ce grâce à quoi l'incidence des rayons lumineux sur ladite première face principale, à l'intérieur de la plaque optique, est accrue et le rayonnement parasite parvenant à la face de sortie est diminué, en même temps que l'épaisseur de la plaque optique peut être réduite.

Avantageusement en outre, le plan défini par ladite première face principale intersecte le diaphragme sous l'ouverture de celui-ci, ce grâce à quoi une majeure partie de la lumière parasite transmise à partir de la face de sortie est interceptée par le diaphragme sous l'ouverture de celui-ci. Toutefois, il convient que l'inclinaison de la première face principale ne soit pas excessive afin qu'il n'en résulte pas un accroissement substantiel de l'épaisseur de la plaque optique et il est alors souhaitable que l'inclinaison de ladite première face principale soit juste suffisante pour que le susdit plan intersecte le diaphragme au voisinage immédiat de son ouverture. De façon pratique, on peut prévoir que l'angle d'inclinaison de ladite première face principale par rapport à un plan perpendiculaire à la face de sortie soit compris entre 2° et 25°, cet angle ayant typiquement de préférence une valeur d'environ 10°.

Bien que diverses solutions soient envisageables pour l'implantation de la source lumineuse par rapport à la plaque optique, il est toutefois intéressant, toujours dans le but de réaliser un dispositif aussi peu épais que possible, de recourir à la solution consistant en ce que, la plaque optique possédant des troisième et quatrième faces latérales s'étendant respectivement entre les susdites première et seconde faces latérales et mutuellement opposées, ces troisième et quatrième faces latérales soient inclinées en direction l'une de l'autre à partir de la première face latérale et qu'au moins une source lumineuse soit disposée en regard d'au moins l'une des troisième et quatrième faces latérales.

Pour simplifier une fabrication en grande série du dispositif optique conforme à l'invention, il est possible d'envisager une réduction du nombre des composants (nombre déjà peu élevé à la base) et à cette fin de faire en sorte que la plaque optique et l'objectif focaliseur soient constitués sous forme d'une pièce unique présentant une fente définie par la face de sortie de la plaque optique et la face d'entrée de l'objectif focaliseur, ladite fente étant conformée pour recevoir ledit diaphragme. La pièce monobloc ainsi constituée peut, par exemple, être fabriquée par moulage d'une matière transparente de qualité optique, notamment d'une matière synthétique peu onéreuse.

Dans un mode de réalisation préféré du dispositif de l'invention, on prévoit qu'en aval de l'objectif soit prévu un miroir agencé pour réfléchir le rayonnement lumineux sensiblement perpendiculairement à la plaque optique. Ainsi, toujours en conservant la caractéristique recherchée d'une épaisseur aussi réduite que possible pour le dispositif d'imagerie, le faisceau optique réfléchi par le miroir de sortie peut attaquer directement un capteur appartenant au dispositif de traitement de l'image et d'analyse des empreintes digitales qui est situé en aval. Autrement dit, la sortie du faisceau optique hors du dispositif d'imagerie se fait par la seconde face principale opposée à la première face principale sur laquelle est apposé le doigt, ce qui permet de concevoir un appareil globalement compact et aussi peu épais que souhaité.

L'invention sera mieux comprise à la lecture de la description détaillée qui suit de certains modes de réalisation préférés donnés uniquement à titre d'exemples non limitatifs. Dans cette description, on se réfère au dessin annexé sur lequel :
- la figure 1 est un schéma optique illustrant en vue de côté la constitution d'un dispositif d'imagerie agencé conformément à l'invention ;
- la figure 2 est un schéma illustrant en vue de bout un agencement préféré du dispositif d'imagerie de la figure 1 ;
- la figure 3 est une vue de côté d'un mode de réalisation préféré du dispositif d'imagerie de la figure 1 ; et
- la figure 4 est un schéma illustrant de façon simplifiée un agencement préféré du dispositif d'imagerie conforme à l'invention.

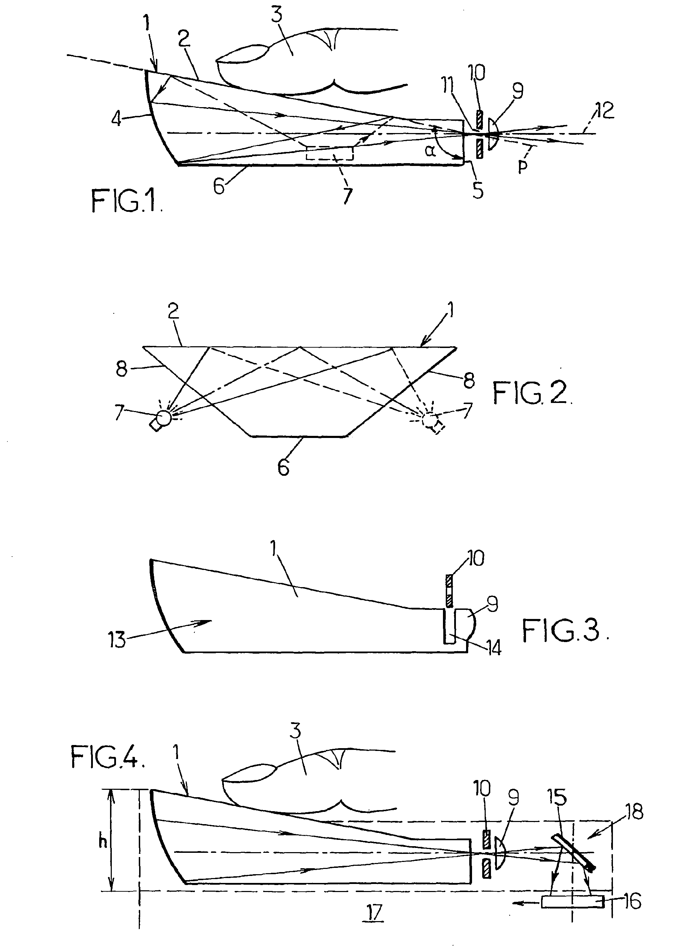

En se reportant tout d'abord à la figure 1, le dispositif d'imagerie conforme à l'invention comprend une plaque optique 1, avec :
- une première face principale 2 constituant une face d'apposition d'un doigt 3 dont on souhaite obtenir une image des empreintes digitales,
- une première face latérale 4 conformée en miroir convergent, et
- une seconde face latérale 5, opposée à la première face latérale 4 et formant face de sortie de la plaque optique 1.

La plaque optique 1 possède également une seconde face principale 6, opposée à la susdite première face principale 2 et pouvant par exemple être sensiblement perpendiculaire à la face de sortie 5. Deux autres faces latérales 8 (non visibles sur la figure 1), dont il sera question plus loin, s'étendent respectivement entre les deux susdites première et seconde faces latérales 4, 5.

Le dispositif d'imagerie comprend en outre au moins une source lumineuse 7 pour éclairer la susdite première face principale 2 à travers la plaque optique 1. La source lumineuse pourrait être disposée sous la plaque optique 1, en regard de la seconde face principale 6 de celle-ci ; toutefois un tel agencement conduirait à accroître l'épaisseur du dispositif d'imagerie. Il s'avère plus judicieux, alors, de disposer la source lumineuse latéralement à la plaque optique 1 et de prévoir au moins une source lumineuse 7 en regard d'au moins une des deux susdites autres faces latérales 8 de la plaque 1. De préférence, comme illustré à la figure 2, on obtient un éclairage plus uniforme de la première face principale 2 et du doigt 3 qui y est apposé en prévoyant
- que deux sources lumineuses 7 sont disposées en regard respectivement des deux autres faces latérales 8 et
- que les deux faces latérales 8 sont inclinées en direction l'une de l'autre à partir de la première face principale 2, cette inclinaison étant aussi forte que possible afin que la lumière parvienne sur la face 2 sous l'incidence la plus faible possible.

Le dispositif d'imagerie comprend en outre un objectif focaliseur 9 (par exemple une lentille convergente) disposé en regard de la face de sortie 5 de la plaque optique 1. L'objectif focaliseur 9 a son point focal objet situé sensiblement dans le plan focal du miroir convergent 4.

Enfin, un diaphragme 10 muni d'une ouverture 11 est interposé entre ladite face de sortie 5 de la plaque optique 1 et de l'objectif focaliseur 9, en étant situé sensiblement à proximité de l'objectif focaliseur 9.

L'axe 12 du faisceau réfléchi par le miroir convergent 4 est sensiblement perpendiculaire à la face de sortie 5, et l'ouverture 11 du diaphragme 10 et l'objectif focaliseur 9 sont disposés coaxialement à cet axe 12.

Selon l'invention, la première face principale 2 de la plaque optique 1 forme, avec la face de sortie 5, un angle α supérieur à 90° de manière que l'incidence des rayons lumineux émis par la ou les sources 7 sur cette face principale 2 soit accrue et plus proche de la normale, ce qui conduit à une réduction du rayonnement parasite (lumière diffuse) parvenant à la face de sortie 5. Il en résulte que l'épaisseur de la plaque optique peut être réduite par rapport à l'épaisseur d'une plaque optique antérieure pour le même taux de rayonnement parasite.

Pour réduire encore le rayonnement parasite parvenant à l'objectif focaliseur 9, on prévoit que le plan P défini par la première face principale 2 intersecte le diaphragme 10 en dehors de l'ouverture 11 de celui-ci, et plus précisément, compte tenu des positions relatives de la face 2 et du diaphragme 10, que le plan P intersecte le diaphragme 10 sous l'ouverture 11. Toutefois, une inclinaison trop importante de la face 2 ne permettrait pas de donner à la plaque optique une épaisseur aussi faible que souhaité : il est donc nécessaire de limiter l'inclinaison de la face 2 à une valeur juste suffisante pour que le plan P précité intersecte le diaphragme 10 certes sous l'ouverture 11 de celui-ci, mais au voisinage immédiat de cette ouverture. En pratique, l'angle α précité est compris entre 2° et 25°, et dans un exemple typique de réalisation il est d'environ 10°.

Le très petit nombre de composants optiques du dispositif d'imagerie conforme à l'invention permet d'envisager, dans le cadre d'une fabrication en grande série, que la plaque optique 1 et l'objectif focaliseur 9 soient réunis sous forme d'une pièce unique, monobloc, 13 comme illustré à la figure 3, ladite pièce 13 présentant une fente 14 définie par les faces en regard de la plaque optique 1 et de l'objectif focaliseur 9, ladite fente 14 étant conformée pour recevoir le diaphragme 10. La pièce 13 peut être fabriquée par moulage en un matériau transparent de qualité optique, notamment en matière synthétique.

A la figure 4 est illustré un exemple d'implantation du dispositif d'imagerie conforme à l'invention dans un appareil de détection d'empreintes digitales. Le dispositif d'imagerie agencé selon l'invention (illustré dans sa configuration en composants distincts selon la figure 1) est complété par un miroir plan 15 disposé à la suite de l'objectif focaliseur 9 de manière à réfléchir le faisceau perpendiculairement à l'axe optique 12, en direction d'un capteur optique 16 sous-jacent constituant le composant d'entrée des moyens 17 propres à la détection de l'image et à l'analyse des empreintes digitales.

Grâce aux dispositions conformes à l'invention, le dispositif d'imagerie, désigné dans son ensemble par la référence 18 à la figure 4, peut être agencé avec une épaisseur h très faible, de l'ordre de 5 mm, conformément aux exigences requises pour son implantation dans l'appareil de détection d'empreintes digitales, en même temps qu'il est apte à délivrer une image de bonne qualité des empreintes digitales.

## Revendications

1. Dispositif optique de formation d'une image d'empreintes digitales, comprenant :
- une plaque optique (1) avec :
· une première face principale (2) constituant une face d'apposition d'un doigt (3) dont on souhaite obtenir une image des empreintes digitales,
une première face latérale (4) conformée en miroir convergent, et
· une seconde face latérale (5), opposée à la première face latérale (4) et formant face de sortie de la plaque optique,
- au moins une source lumineuse (7) pour éclairer la susdite première face principale (2) à travers la plaque optique (1),
- un objectif focaliseur (9), situé en regard de ladite face de sortie (5) de la plaque optique et ayant son point focal objet situé sensiblement dans le plan focal du miroir convergent, et
- un diaphragme (10) muni d'une ouverture (11), interposé entre ladite face de sortie (5) et ledit objectif focaliseur (9) et situé sensiblement à proximité de l'objectif focaliseur,
**caractérisé en ce que** la susdite première face principale (2) de la plaque optique (1) forme, avec la face de sortie (5) de cette plaque optique, un angle supérieur à 90°, ce grâce à quoi l'incidence des rayons lumineux sur ladite première face principale, à l'intérieur de la plaque optique, est accrue et le rayonnement parasite parvenant à la face de sortie est diminué, en même temps que l'épaisseur de la plaque optique peut être réduite.

2. Dispositif optique selon la revendication 1, **caractérisé en ce que** le plan (P) défini par ladite première face principale (2) intersecte le diaphragme (10) sous l'ouverture (11) de celui-ci,
ce grâce à quoi une majeure partie de la lumière parasite transmise à partir de la face de sortie est interceptée par le diaphragme sous l'ouverture de celui-ci.

3. Dispositif optique selon la revendication 2, **caractérisé en ce que** l'inclinaison de ladite première face principale (2) est juste suffisante pour que le susdit plan (P) intersecte le diaphragme (10) au voisinage immédiat de son ouverture (11).

4. Dispositif optique selon la revendication 3, **caractérisé en ce que** l'angle d'inclinaison de ladite première face principale (2) par rapport à un plan perpendiculaire à la face de sortie est compris entre 2° et 25°.

5. Dispositif optique selon la revendication 4, **caractérisé en ce que** ledit angle d'inclinaison de la première face principale (2) est d'environ 10°.

6. Dispositif optique selon l'une quelconque des revendications 1 à 5, la plaque optique (1) possédant des troisième et quatrième faces latérales (8) s'étendant respectivement entre les susdites première et seconde faces latérales (4, 5) et mutuellement opposées, **caractérisé en ce que** ces troisième et quatrième faces latérales (8) sont inclinées en direction l'une de l'autre à partir de la première face latérale (2) et **en ce qu'**au moins une source lumineuse (7) est disposée en regard d'au moins l'une des troisième et quatrième faces latérales.

7. Dispositif optique selon l'une quelconque des revendications précédentes, **caractérisé en ce que** la plaque optique (1) et l'objectif focaliseur (9) sont constitués sous forme d'une pièce (13) unique présentant une fente (14) définie par la face de sortie (5) de la plaque optique (1) et la face d'entrée de l'objectif focaliseur (9), ladite fente (14) étant conformée pour recevoir ledit diaphragme (10).

8. Dispositif optique selon l'une quelconque des revendications précédentes, **caractérisé en ce qu'**en aval de l'objectif focaliseur (9) est prévu un miroir (15) agencé pour réfléchir le rayonnement lumineux sensiblement perpendiculairement à la plaque optique.

## Claims

1. An optical device for forming an image of fingerprints, comprising:
- an optical plate (1) with:
• a first main face (2) constituting a face for affixing a finger (3) of which an image of the fingerprints is to be obtained,
• a first lateral face (4) shaped as a convergent mirror, and
• a second lateral face (5), opposite the first lateral face (4) and forming the exit face of the optical plate,
- at least one light source (7) for illuminating said first main face (2) through the optical plate (1),
- a focusing objective (9), situated facing said exit face (5) of the optical plate and having its object focal point situated substantially in the focal plane of the convergent mirror, and
- a diaphragm (10) provided with an aperture (11), said diaphragm being interposed between said exit face (5) and said focusing objective (9) and being situated substantially in the vicinity to the focusing objective,
**characterized in that** said first main face (2) of the optical plate (1) forms, with the exit face (5) of this optical plate, an angle of greater than 90°,
whereby the angle of incidence of the light rays on said first main face, inside the optical plate, is increased and the stray radiation arriving at the exit face is decreased, at the same time as the thickness of the optical plate can be reduced.

2. The optical device as claimed in claim 1,
**characterized in that** the plane (P) defined by said first main face (2) intersects the diaphragm (10) under the aperture (11) thereof,
whereby a major part of the stray light transmitted from the exit face is intercepted by the diaphragm under the aperture thereof.

3. The optical device as claimed in claim 2, **characterized in that** the inclination of said first main face (2) is just sufficient for said plane (P) to intersect the diaphragm (10) in the immediate vicinity of its aperture (11).

4. The optical device as claimed in claim 3, **characterized in that** the angle of inclination of said first main face (2) with respect to a plane perpendicular to the exit face is between 2° and 25°.

5. The optical device as claimed in claim 4, **characterized in that** said angle of inclination of the first main face (2) is around 10°.

6. The optical device as claimed in any one of claims 1 to 5, the optical plate (1) having third and fourth lateral faces (8) extending respectively between said first and second lateral faces (4, 5) and mutually opposed, **characterized in that** said third and fourth lateral faces (8) are inclined towards one another from the first lateral face (2) and **in that** at least one light source (7) is disposed opposite at least one of the third and fourth lateral faces.

7. The optical device as claimed in any one of claims 1 to 6, **characterized in that** the optical plate (1) and the focusing objective (9) are constituted in the form of one single piece (13) having a slot (14) defined by the exit face (5) of the optical plate (1) and the entrance face of the focusing objective (9), said slot (14) being shaped so as to receive said diaphragm (10).

8. The optical device as claimed in any one of claims 1 to 7, **characterized in that** downstream of the focusing objective (9) a mirror (15) is located being arranged so as to reflect the luminous radiation substantially perpendicularly to the optical plate.

## Patentansprüche

1. Optische Einrichtung zur Erzeugung eines digitalen Fingerabdruckbildes, bestehend aus:
- einer optischen Platte (1) mit
- einer ersten Hauptseite (2), die eine Fläche zum Aufdrücken eines Fingers (3) darstellt, von dem ein digitales Abdruckbild hergestellt werden soll,
- einer ersten seitlichen Seite (4), die als konvergenter Spiegel ausgebildet ist, und
- einer zweiten seitlichen Seite (5), die entgegengesetzt zu der ersten seitlichen Seite (4) angeordnet ist und die Ausgangsseite der optischen Platte darstellt,
- mindestens einer Lichtquelle (7) zum Beleuchten der oben genannten ersten Hauptseite (2) durch die optische Platte (1) hindurch,
- einem Fokussierungsobjektiv (9), das sich vor der Ausgangsseite (5) der optischen Platte befindet und seinen Brennpunkt im Wesentlichen in der Brennpunktsebene des konvergenten Spiegels hat, und
- einer Blende (10) mit einer Blendenöffnung (11), die zwischen der Ausgangsseite (5) und dem Fokussierungsobjektiv (9) angeordnet ist und sich im Wesentlichen nahe bei dem Fokussierungsobjektiv befindet,
**dadurch gekennzeichnet,**
**dass** die obengenannte ersten Hauptseite (2) der optischen Platte (1) mit der Ausgangsseite (5) dieser optischen Platte einen Winkel von mehr als 90° bildet, wodurch der Einfall der Lichtstrahlen auf diese erste Hauptseite im Inneren der optischen Platte verstärkt ist und die an der Ausgangsseite ankommende Störstrahlung verringert wird, während gleichzeitig die Dicke der optischen Platte reduziert werden kann.

2. Optische Einrichtung nach Anspruch 1,
**dadurch gekennzeichnet,**
**dass** die von der ersten Hauptseite (2) definierte Ebene (P) die Blende (10) unter deren Öffnung (11) schneidet, wodurch ein Großteil des von der Ausgangsseite aus übertragenen Störlichts von der Blende unter deren Öffnung abgefangen wird.

3. Optische Einrichtung nach Anspruch 2,
**dadurch gekennzeichnet,**
**dass** die Neigung dieser ersten Hauptseite (2) gerade ausreichend ist, damit diese Ebene (P) die Blende (10) in unmittelbarer Nähe ihrer Öffnung (11) schneidet.

4. Optische Einrichtung nach Anspruch 3,
**dadurch gekennzeichnet,**
**dass** der Neigungswinkel dieser ersten Hauptseite (2) zu einer Ebene, die senkrecht zur Ausgangsseite verläuft, zwischen 2° und 25° beträgt.

5. Optische Einrichtung nach Anspruch 4,
**dadurch gekennzeichnet,**
**dass** dieser Neigungswinkel der ersten Hauptseite (2) ungefähr 10° beträgt.

6. Optische Einrichtung nach einem der Ansprüche 1 bis 5, wobei die optische Platte (1) eine dritte und eine vierte seitliche Seite (8) besitzt, die sich jeweils zwischen der ersten und zweiten, einander gegenüberliegenden, seitlichen Seite (4, 5) erstrecken,
**dadurch gekennzeichnet,**
**dass** diese dritte und diese vierte seitliche Seite (8) von der ersten Hauptseite (2) aus zueinander hin geneigt sind und dass mindestens eine Lichtquelle (7) gegenüber mindestens einer dieser dritten und vierten seitlichen Seiten angeordnet ist.

7. Optische Einrichtung nach einem der vorhergehenden Ansprüche,
**dadurch gekennzeichnet,**
**dass** die optische Platte (1) und das Fokussierungsobjektiv (9) in Form eines einzigen Stücks (13) gebildet sind, welches einen Schlitz (14) aufweist, der von der Ausgangsseite (5) der optischen Platte (1) und der Eintrittsseite des Fokussierungsobjektivs (9) gebildet wird, wobei dieser Schlitz (14) entsprechend geformt ist, um die Blende (10) aufzunehmen.

8. Optische Einrichtung nach einem der vorhergehenden Ansprüche,
**dadurch gekennzeichnet,**
**dass** hinter dem Fokussierungsobjektiv (9) ein Spiegel (15) vorgesehen ist, der so angebracht ist, dass er die Lichtstrahlung im Wesentlichen im rechten Winkel zu der optischen Platte reflektiert.
